# FASCICULE DE BREVET EUROPEEN

(11) **EP 2 052 766 B1**
(45) Date de publication et mention de la délivrance du brevet: **16.05.2012**
(21) Numéro de dépôt: 09152895.0
(22) Date de dépôt: 15.03.2006
(51) Int. Cl.: B01D 29/15, B01D 29/60, B01D 35/18, F02M 37/22

(54) **Système de filtration de liquide avec réchauffage**
Flüssigkeitsfiltersystem mit Vorwärmung
Liquid filtering system with reheating

(30) Priorité: 15.03.2005 FR 0502565
(43) Date de publication de la demande: 29.04.2009
(62) Demande divisionnaire de: 06290420.6
(73) Titulaire: FILTRAUTO, 78286 Guyancourt Cedex (FR)
(72) Inventeur: Leclerc, Patrick, 78980, Neauphlette (FR); Fremont, Laurent, 78990, Elancourt (FR); Lalleman, Xavier, 94200, Ivry-sur-Seine (FR)
(74) Mandataire: Cabinet Plasseraud

(56) Documents cités:
- EP-A- 0 657 198
- EP-A- 0 657 201
- EP-A- 0 662 337
- EP-A- 1 070 530
- EP-A- 1 101 519
- EP-A- 1 188 468
- WO-A-03/076792
- US-A- 3 235 084
- US-A- 4 477 345
- US-A- 5 547 572
- US-B1- 6 248 236

## Description

L'invention se rapporte à un système de filtration de liquide tel que du gazole pour moteur à combustion interne d'un véhicule automobile.

Plus précisément, l'invention concerne en particulier un système de filtration de gazole comprenant des moyens de réchauffage électrique pour permettre un chauffage du gazole qui est susceptible de paraffiner lorsque le véhicule automobile est soumis à des températures très basses. Ce paraffinage du gazole est susceptible d'obstruer l'élément filtrant entraînant donc une perturbation de l'alimentation en gazole du moteur.

On connaît, par le document EP 0 657 201, un ensemble de filtration comprenant un module formant couvercle avec un élément chauffant placé dans une cavité supérieure de ce module formant couvercle. Il est également connu, par le document US-A-4 477 345, un système de filtration de liquide de ce type comportant :
- une cuve métallique ou plastique sur laquelle est fixé un couvercle pour former un boîtier délimitant un volume intérieur,
- un élément filtrant disposé dans le volume intérieur du boîtier, ledit élément filtrant présente une forme sensiblement annulaire et comporte une face externe et une face interne, l'élément filtrant définit un espace intérieur creux et délimite une zone d'amont communiquant avec une entrée de liquide et une zone d'aval communiquant avec une sortie de liquide,
- un premier conduit s'étendant dans la zone d'amont et dans l'espace intérieur creux, le premier conduit étant relié de manière étanche à l'entrée de liquide,
- un deuxième conduit s'étendant dans la zone d'aval et relié de manière étanche à la sortie de liquide,
- un espace annulaire s'étendant autour de la face externe de l'élément filtrant,
- des moyens de réchauffage électriques du liquide montés de manière amovible et étanche sur le boîtier, lesdits moyens de réchauffage comprenant un connecteur électrique et un élément chauffant électrique qui s'étend dans l'espace intérieur creux, dans le premier conduit.

La présence de l'élément chauffant dans l'espace intérieur creux permet de réduire l'encombrement du système, procure une bonne diffusion de la chaleur produit par l'élément chauffant et protège l'élément chauffant en cas choc, ce qui réduit le risque de court-circuit.

L'invention vise à proposer un système de filtration présentant en particulier une plus grande robustesse, une bonne efficacité pour réchauffer le liquide et améliorer l'efficacité de séparation de l'eau du liquide à filtrer.

Pour ce faire, conformément à l'invention, le système de filtration est tel que défini dans la revendication 1.

La circulation du liquide depuis l'extérieur vers l'intérieur du filtre améliore la séparation eau/liquide à filtrer ou du moins facilite la récupération de l'eau. En outre, le fait d'effectuer la séparation de l'eau en amont de l'élément filtrant réduit le risque que des gouttes d'eau formées par coalescence soient entraînées vers la sortie de liquide et viennent notamment perturber le fonctionnement du moteur ou détériorer les injecteurs.

En outre, après avoir été réchauffé, le liquide traverse donc l'élément filtrant puis ressort dans la zone d'aval, à l'intérieur de l'espace intérieur creux où circule également le liquide (de la zone d'amont) à réchauffer. Par conséquent, le liquide de la zone d'aval contribue à préchauffer le liquide de la zone d'amont avant ou sensiblement en même temps que le liquide de la zone d'aval est réchauffé par l'élément chauffant. Il existe par conséquent une synergie du fait de la présence à la fois du premier conduit, du deuxième conduit et de l'élément chauffant dans l'espace intérieur creux, cette synergie rendant plus efficace le réchauffage du liquide dans la zone d'amont.

Enfin, le tube séparateur protège l'élément chauffant électrique.

D'autres dispositions sont visées dans les revendications dépendantes.

D'autres caractéristiques et avantages de l'invention apparaîtront au cours de la description suivante de plusieurs de ses formes de réalisation, données à titre d'exemples non limitatifs, en regard des dessins.

Sur les dessines :
- la figure 1 représente une vue en coupe axiale d'un système de filtration selon un premier mode de réalisation;
- la figure 2 représente une vue en coupe axiale du système de filtration selon un second mode de réalisation qui représente l'invention;
- la figure 3 représente une vue en coupe axiale du système de filtration selon un troisième mode de réalisation;
- la figure 4 représente une vue en coupe axiale du système de filtration selon un quatrième mode de réalisation;
- la figure 5 représente une variante du quatrième mode de réalisation du système de filtration représenté sur la figure 4 ; et
- la figure 6 représente une vue en coupe partielle et agrandie d'un système de dégazage pouvant être intégré dans la variante de réalisation représentée sur la figure 5.

Sur les différentes figures, les mêmes références désignent des éléments identiques ou similaires.

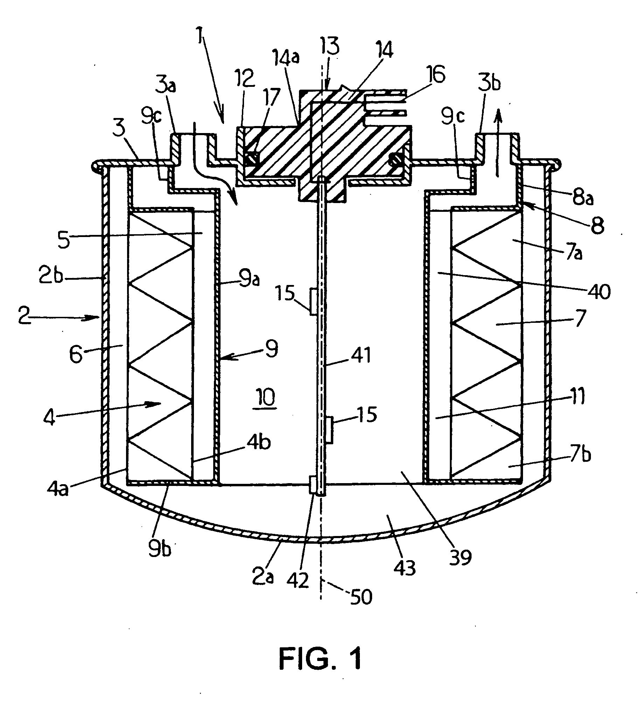

La figure 1 représente un premier mode de réalisation du système de filtration 1 du liquide. Ce système de filtration 1 comprend une cuve 2 en métal ou en plastique qui présente un fond 2a à partir duquel s'étend vers le haut une paroi cylindrique 2b s'étendant autour d'un axe de révolution 50 et présentant un rebord supérieur directement solidaire d'un couvercle 3. Ce couvercle 3 présente un bord qui est directement fixé sur le bord circulaire de la cuve métallique 2. Le bord du couvercle peut être, par exemple, serti, soudé, vissé ou collé sur le bord circulaire de la cuve métallique. La cuve métallique 2 ainsi que le couvercle 3 forment donc un boîtier délimitant un volume intérieur dans lequel est disposé un élément filtrant 4 de forme annulaire s'étendant suivant l'axe de révolution 50. L'élément filtrant 4 présente une face externe 4a et une face interne 4b. Sa face interne 4b délimite un espace intérieur creux 5. Sa face externe 4a délimite avec la paroi cylindrique 2b de la cuve métallique 2 un espace annulaire 6. Cet élément filtrant 4 comprend un media filtrant 7 qui s'étend entre une extrémité supérieure 7a et une extrémité inférieure 7b. L'extrémité supérieure 7a du media filtrant 7 est fixée de manière étanche à un flasque supérieur 8. Ce flasque supérieur 8 présente également une forme annulaire avec une ouverture ayant un diamètre sensiblement identique au diamètre interne de l'élément filtrant, et un rebord périphérique externe saillant 8a qui est en contact étanche avec le couvercle 3. Ce couvercle 3 présente également une entrée de liquide 3a ainsi qu'une sortie de liquide 3b pour permettre la circulation et la filtration du liquide à l'intérieur du système de filtration 1 comme cela sera décrit plus en détail ultérieurement.

Le système de filtration 1 comprend en outre un tube séparateur 9 qui est directement disposé dans l'espace intérieur creux 5 de l'élément filtrant 4, ce tube séparateur présentant une paroi cylindrique 9a qui s'étend vers le bas par une paroi horizontale 9b solidaire de manière étanche de l'extrémité inférieure 7b du media filtrant 7. La paroi cylindrique 9a du tube séparateur 9 s'étend également vers le haut par une extrémité supérieure 9c qui est également en contact étanche avec le couvercle 3. Cette extrémité supérieure 9c qui est de forme circulaire est disposée radialement vers l'extérieur par rapport à l'entrée du liquide 3a, tandis qu'elle est disposée radialement vers l'intérieur par rapport à la sortie de liquide 3b.

Le tube séparateur 9, la cuve 2 et l'élément filtrant 4 définissent une zone d'amont 10 qui s'étend entre l'entrée de liquide 3a et la face externe 4a de l'élément filtrant. Le tube séparateur 9 définit en particulier un conduit d'entrée 39 s'étendant dans la zone d'amont et dans l'espace intérieur creux 5 suivant l'axe de révolution 50. La zone d'amont 10 comprend également un espace de récupération d'eau 43 qui s'étend entre l'extrémité inférieure 7b du média filtrant 7 et le fond 2a de la cuve, 2. La zone d'amont 10 comprend en outre l'espace annulaire 6. Le conduit d'entrée 39 est par conséquent relié à une extrémité à l'entrée de liquide 3a et à l'autre extrémité à l'espace annulaire par l'intermédiaire de l'espace de récupération d'eau 43 dans lequel le liquide circule radialement vers l'extérieur.

Le tube séparateur 9 et l'élément filtrant 4 définissent également une zone d'aval 11 qui s'étend entre la face interne 4b de l'élément filtrant et la sortie 3b de liquide. La paroi cylindrique 9a du tube séparateur 9 définit en particulier avec la face interne 4b de l'élément filtrant un conduit de sortie 40 s'étendant dans l'espace intérieur creux 5 suivant l'axe de révolution 50. La zone d'aval 11 comprend également le volume défini par l'extrémité supérieure 9c du tube séparateur 9 et le flasque 8 de l'élément filtrant 4, ce volume débouchant directement dans la sortie de liquide 3b.

Le système de filtration 1 préalablement décrit forme donc une unité jetable lorsque l'élément filtrant 4 ne peut plus assurer de manière convenable la filtration du liquide. Cette unité jetable permet de préserver la propreté de l'élément filtrant. La disposition et le montage de manière amovible des moyens de réchauffage permettent aussi de retirer ces derniers de l'unité à jeter et de les redisposer sur une nouvelle unité en les conservant donc d'une unité jetable à l'autre.

Le couvercle 3 présente également une ouverture centrale délimitée par une paroi cylindrique 12 qui forme un logement pour des moyens de réchauffage électrique 13. Ces moyens de réchauffage électrique 13 sont formés par un connecteur 14 directement disposé de manière étanche et amovible dans le logement formé par la paroi 12, ce connecteur étant relié à un élément chauffant 15 qui est porté par une plaque 41 et directement placé dans la zone d'amont 10 du système de filtration. Ce connecteur 14 peut comprendre une pluralité de broches 16 qui sont directement moulées dans une matière plastique et qui sont reliées électriquement à l'élément chauffant 15 placé dans la zone centrale de l'élément filtrant. Par ailleurs, comme on peut le voir sur la figure 1, un joint d'étanchéité 17 peut par exemple assurer l'étanchéité entre la matière plastique du connecteur 14 et la paroi 12 formant l'ouverture centrale du couvercle 3.

La plaque 41 peut par exemple se présenter sous la forme d'une carte électronique comprenant un substrat sur lequel est sérigraphiée une ou plusieurs pistes de cuivre tracées en serpentin qui réalisent la fonction chauffage. Le substrat comporte également une autorégulation réalisée par exemple à l'aide d'un transistor de puissance et un circuit de commande dont l'élément de mesure pourrait être une résistance à coefficient de température négative. Selon des variantes de réalisation les pistes chauffantes sérigraphiées sont tracées sur une seule face ou sur les deux faces de la plaque 41. Selon une autre variante de réalisation les pistes chauffantes sérigraphiées sont remplacées par une ou plusieurs pastilles CTP (à coefficient de température positif) 15, de type polymère ou céramique, à coefficient de température positif qui sont également connues sous le nom de résistances auto-régulantes dont la particularité est d'avoir une résistance qui augmente avec la température.

Cette carte électronique 41 présente dans sa partie inférieure deux plaques de cuivre 42 s'étendant dans l'espace de récupération d'eau 43 afin de réaliser un détecteur d'eau au niveau du fond 2a de la cuve métallique 2. Par ailleurs, la carte de circuit imprimé peut également être pourvue de moyens de détection de pression. L'extrémité supérieure de la carte électronique peut également être directement soudée sur les broches du connecteur 14.

La plaque électronique ou la plaque de circuit imprimé 15 utilisée comme moyen de réchauffage électrique peut par exemple être identique à celle décrite dans la demande de brevet français FR 2 868 331.

Ces moyens de réchauffage électrique ne seront donc pas décrits plus en détail dans la suite de la description.

Ainsi, lorsque le liquide ou gazole entre par l'entrée de liquide 3a, le liquide circule au centre du filtre et plus précisément dans le conduit d'entrée 39 en rentrant en contact avec les pistes de cuivre chauffantes ou pastilles CTP 15 réalisées sur la plaque 41 avant d'être dirigé vers le fond 2a de la cuve métallique 2 dans l'espace de récupération d'eau 43. Le liquide ou gazole ainsi réchauffé circule ensuite dans l'espace annulaire 6 délimité par la paroi cylindrique 2b de la cuve 2 et l'élément filtrant 4 avant de traverser radialement cet élément filtrant. On peut noter que le gazole ou liquide ainsi chauffé traverse l'élément filtrant radialement de l'extérieur vers l'intérieur avant de se retrouver dans le conduit de sortie 40. Le gazole ainsi réchauffé et filtré est ensuite évacué via la sortie 3b du système de filtration 1.

La circulation du liquide de l'extérieur vers l'intérieur de l'élément filtrant 4 favorise la séparation du gazole et de l'eau qui y est contenue. L'élément filtrant 4 assure donc la rétention de l'eau tout en permettant une décantation au niveau de l'espace de récupération d'eau 43.

Selon ce premier mode de réalisation du système de filtration conforme à la figure 1, l'extrémité inférieure 7b du média 7 peut également être pourvue d'un flasque inférieur présentant un rebord périphérique interne connecté de manière étanche à l'extrémité inférieure de la paroi cylindrique 9a du tube séparateur 9.

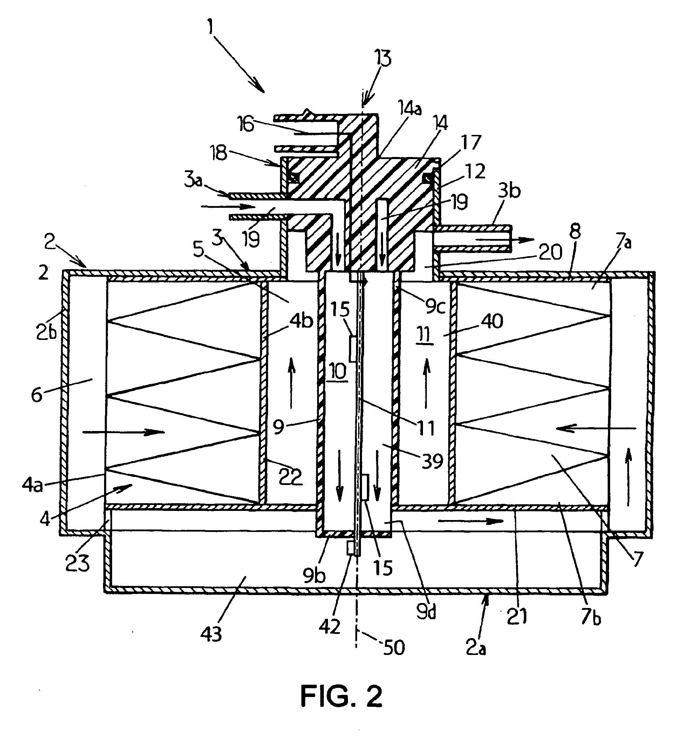

La figure 2 représente un second mode de réalisation du système de filtration 1 et représente l'invention.

Selon ce second mode de réalisation, l'entrée de liquide 3a ainsi que la sortie de liquide 3b sont formées par des canules métalliques qui sont directement brasées sur une jupe métallique 18 de forme cylindrique et qui est également raccordée de manière étanche dans une ouverture pratiquée sur le couvercle 3. Ce couvercle 3 est également serti sur l'extrémité supérieure de la paroi cylindrique 2b de la cuve métallique 2. Dans cet exemple de réalisation, les moyens de réchauffage électrique 13 comprennent également un connecteur 14 réalisé par exemple en matière plastique dans lequel sont surmoulées des broches 16 qui sont directement raccordées à l'élément chauffant 15 disposé dans la zone d'amont 10 délimitée par le tube séparateur 9.

Par ailleurs, le connecteur 14 présente également un passage 19 qui permet de relier l'entrée de liquide 3a au conduit d'entrée 39, et d'autre part, un passage 20 qui permet de le conduit de sortie 40 à la sortie de liquide 3b.

L'extrémité supérieure du tube séparateur 9 est directement raccordée de manière étanche à la partie inférieure du connecteur 14 de manière à permettre une entrée du liquide à filtrer directement dans la zone d'amont 10 formée par le tube séparateur 9 dans lequel est directement disposé l'élément chauffant 15. Ce tube séparateur 9 forme également un élément de protection pour l'élément chauffant 15 et la carte électronique 41. L'extrémité supérieure du tube séparateur 9 peut être directement réalisée d'une seule pièce avec le connecteur 14 ou alors être fixée de manière étanche, par tout moyen approprié, à la partie inférieure de ce connecteur 14. A titre d'exemple, l'extrémité supérieure du tube séparateur 9 peut être fixée au connecteur 14 par clipsage, soudure, vissage ou collage. Comme on peut le voir sur cette figure 2, la partie inférieure du tube séparateur 9 est fermée axialement tout en présentant une ouverture radiale 9d qui permet au liquide sortant d'être dirigé radialement vers l'extérieur de l'élément filtrant 4.

Le fond du tube séparateur présente également un orifice qui est traversé par l'extrémité inférieure de la carte de circuit imprimé pourvue des moyens de détection d'eau 42 disposés dans l'espace de récupération d'eau 43, au voisinage du fond 2a de la cuve 2.

Par ailleurs, le média filtrant 7 de l'élément filtrant 4 présente également une extrémité supérieure 7a et une extrémité inférieure 7b sur lesquelles sont respectivement raccordés de manière étanche des flasques supérieur 8 et inférieur 21. Le flasque supérieur 8 est également raccordé de manière étanche à la partie inférieure de la jupe 18 tandis que le rebord périphérique interne du flasque inférieur 21 du média filtrant 7 est raccordé de manière étanche à la surface extérieure du tube séparateur 9.

Ainsi, lorsque le liquide ou le gazole entre par l'entrée de liquide 3a, ce liquide circule tout d'abord dans le passage 19 formé dans le connecteur 14 pour déboucher dans le conduit d'entrée 39 dans lequel est disposé l'élément chauffant 15, de manière à faire entrer en contact le liquide avec ledit élément chauffant 15. Le liquide ou gazole ainsi réchauffé sort du tube séparateur 9 par son ouverture radiale 9d pour être ensuite dirigé radialement vers l'extérieur de l'élément filtrant 4. On peut également noter que suivant ce mode de réalisation, le gazole ou liquide ainsi chauffé traverse donc l'élément filtrant 4 radialement de l'extérieur vers l'intérieur avant de se retrouver dans le conduit de sortie 40. Le gazole ainsi réchauffé et filtré est ensuite évacué via le passage 20 réalisé dans le connecteur 14 et la sortie 3b du système de filtration 1.

Comme on peut le voir sur cette figure 2, l'élément filtrant 4 ou plus précisément le média filtrant 7 peut également être pourvu au niveau de sa partie interne d'un tube de rigidification ajouré 22 permettant d'assurer le maintient du média filtrant lors de son fonctionnement ainsi que la circulation du liquide à travers le média filtrant 7.

Par ailleurs, le flasque inférieur 21 de l'élément filtrant 4 peut également être pourvu d'entretoises 23 qui s'étendent vers le bas en direction du fond 2a de la cuve métallique 2 de manière à assurer un espace suffisant entre le flasque inférieur 21 et le fond 2a de la cuve de telle sorte que le liquide puisse se diriger radialement vers l'extérieur de l'espace de récupération d'eau 43 vers l'espace annulaire 6, avant de traverser le média filtrant 7. Ces entretoises 23 peuvent être réalisées à partir d'une matière élastiquement déformable pour assurer le plaquage du flasque supérieur 8 de manière étanche contre le couvercle 3. Pour assurer l'étanchéité entre le flasque supérieur 8 et le couvercle 3, un ressort peut aussi être disposé entre le fond 2a de la cuve et le flasque inférieur 21.

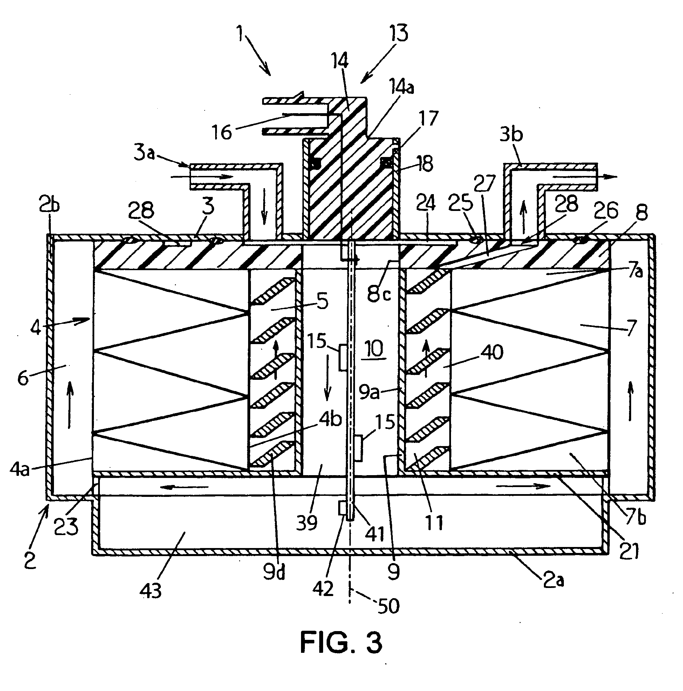

La figure 3 représente un troisième mode de réalisation du système de filtration 1.

Selon ce troisième mode de réalisation, l'entrée de liquide 3a ainsi que la sortie de liquide 3b sont formées par des canules métalliques qui sont directement raccordées de manière étanche sur le couvercle 3 du système de filtration 1. L'élément filtrant 4 ou plus exactement son média filtrant 7 s'étend toujours entre une extrémité supérieure 7a raccordée de manière étanche à un flasque supérieur 8 et une extrémité inférieure 7b qui est également raccordée de manière étanche à un flasque inférieur 21 dont le rebord périphérique interne est raccordé de manière étanche à l'extrémité inférieure du tube séparateur 9. Comme on peut le voir sur cette figure 3, l'extrémité inférieure du tube séparateur 9 est ouverte en direction du fond 2a de la cuve métallique 2. Par ailleurs, l'extrémité supérieure du tube séparateur 9 est raccordée de manière étanche à la face inférieure du flasque supérieur 8 de l'élément filtrant 4.

Selon ce mode de réalisation, le connecteur 14 des moyens de réchauffage électrique 13 est également disposé de manière étanche et amovible dans une jupe 18 qui est elle-même rapportée de manière étanche sur le couvercle 3. La plaque 41 portant l'élément chauffant 15 des moyens de réchauffage électrique 13 s'étend également axialement à l'intérieur du tube 9 qui définit une partie de la zone d'amont 10. De manière à raccorder le conduit d'entrée 39 à l'entrée de liquide 3a, la surface supérieure du flasque 8 comprend un évidement 24, par exemple circulaire, qui est disposé en regard de l'entrée de liquide 3a pour permettre une circulation du liquide ou gazole à filtrer depuis l'entrée de liquide 3a vers le conduit d'entrée 39. Bien entendu, cet évidement circulaire 24 du flasque communique également avec une ouverture centrale 8c directement réalisée dans le flasque supérieur 8 et qui présente un diamètre sensiblement équivalent au diamètre interne du tube séparateur 9. Par ailleurs, la surface supérieure du flasque 8 est également en contact étanche avec le couvercle 3 par exemple au moyen de joints d'étanchéité 25 et 26 qui assurent une étanchéité entre la zone d'amont 10 et la zone d'aval 11.

De même, le flasque supérieur 8 comprend un conduit de circulation 27 qui s'étend obliquement par rapport à la direction axiale 50 tout en s'étendant sur toute l'épaisseur du flasque supérieur 8. Ce conduit de circulation permet de raccorder de manière étanche la sortie de liquide 3b au conduit de sortie 40. La surface supérieure du flasque 8 peut également être pourvue d'une rainure circulaire 28 qui forme avec le couvercle 3 un canal circulaire étanche destiné à être disposée en regard de la sortie de liquide 3b et qui est également en communication avec l'extrémité supérieure du conduit de circulation 27 de telle sorte que l'élément filtrant ne soit pas nécessairement indexé angulairement par rapport au couvercle 3 lors de l'assemblage du système de filtration 1.

Le flasque inférieur 21 peut également être pourvu d'entretoises 23 de manière à laisser un espace suffisant entre le flasque inférieur 21 et le fond 2a de la cuve pour permettre au liquide ou gazole chauffé de se diriger radialement vers l'extérieur de l'espace de récupération d'eau 43 vers l'espace annulaire 6 avant de traverser l'élément filtrant 4 de l'extérieur vers l'intérieur et de déboucher dans le conduit de sortie 40 puis d'être évacué par la sortie de liquide 3b.

Par ailleurs, comme on peut le voir sur cette figure 3, le tube séparateur 9 peut également être pourvu au niveau de sa surface extérieure d'un filet hélicoïdal 9e disposé dans le conduit de sortie 40 de manière à permettre une circulation en spirale du liquide ou gazole chauffé puis filtré avant de déboucher dans la sortie de liquide 3b via le conduit de circulation 27 directement réalisé dans le flasque supérieur 8. Ce tube séparateur 9 pourvu d'un filet hélicoïdal 9e sert à supporter (centrer) le média filtrant 7 tout en assurant un passage annulaire pour le liquide filtré.

Par ailleurs, la rainure circulaire 28 qui forme un canal circulaire avec le couvercle 3 est disposée entre les joints d'étanchéité 25 et 26 de manière à assurer une étanchéité entre la zone d'amont 10 et la zone d'aval 11.

Les joints d'étanchéité 25, 26 peuvent être remplacés par des bourrelets d'étanchéité s'étendant axialement à partir du flasque supérieur 8.

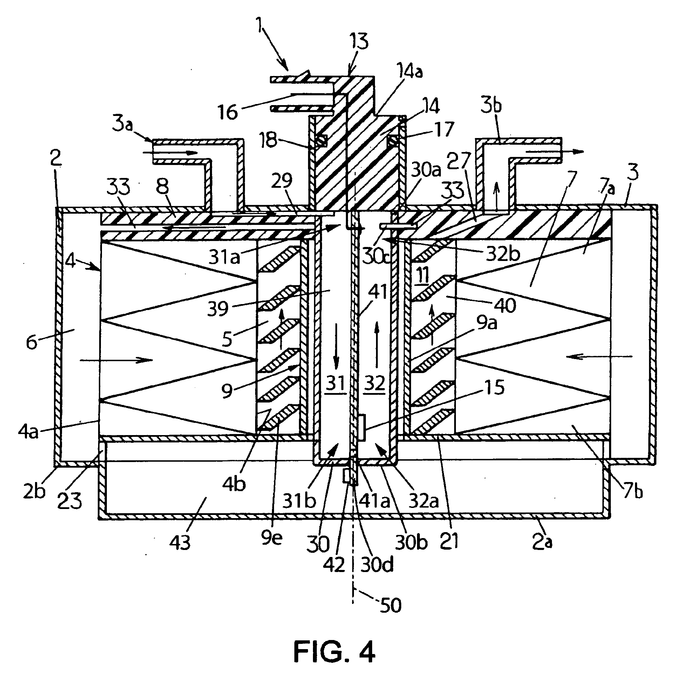

La figure 4 représente un quatrième mode de réalisation du système de filtration 1 conforme à l'invention.

Ce système de filtration 1 représenté sur la figure 4 diffère de celui représenté sur la figure 3 en ce sens qu'un fourreau 30 est directement disposé à l'intérieur du tube séparateur 9. Le fourreau 30 peut être réalisé en plastique. Ce fourreau 30 présente une extrémité supérieure 30a qui est raccordée de manière étanche à l'entrée de liquide 3a via une ouverture circulaire ou un passage 29 réalisé sur la surface supérieure du flasque 8 et une extrémité inférieure fermée 30b. Le conduit d'entrée 39 s'étend à l'intérieur du fourreau, ainsi que la plaque 41 séparant le conduit d'entrée 39 en deux enceintes 31, 32 qui permettent une double mise en contact du liquide avec la plaque 41 portant l'élément chauffant 15 de manière à augmenter la surface d'échange thermique et ainsi améliorer l'efficacité du réchauffage du carburant. Ce fourreau 30 peut être monté solidaire sur le connecteur 14 par clipsage, soudage, vissage ou collage. Ce fourreau 30 assure ainsi la protection des moyens de réchauffage 13 lorsque ces derniers sont retirés de la jupe 18. Dans ce mode de réalisation, la plaque 41 peut également être réalisé par une plaque de circuit imprimé comportant au moins une pastille de résistance CTP chauffante ou au moins une piste sérigraphiée chauffante tracée en serpentin disposée dans l'enceinte 32. L'extrémité inférieure de cette plaque 41 présente un orifice 41a pour permettre une double circulation du liquide à la fois dans l'enceinte 31 et dans l'enceinte 32.

L'enceinte 31 présente une extrémité supérieure amont 31a reliée à l'entrée de liquide 3a et une extrémité inférieure aval 31b. L'enceinte 32 présente une extrémité supérieure aval 32b reliée à un canal 33 et une extrémité inférieure 32a reliée à extrémité inférieure aval 31b de l'enceinte 31 par l'orifice 41a. Le liquide circule vers le bas dans l'enceinte 31 et vers le haut dans l'enceinte 32.

Par ailleurs, le fourreau présente également au niveau de sa partie supérieure une ouverture 30c disposée au regard du canal 33 qui s'étend radialement vers l'extérieur et dans l'épaisseur du flasque 8 pour permettre une circulation du liquide ainsi chauffé en direction de l'extérieur de l'élément filtrant 4 et ce au niveau du flasque supérieur 8. Le liquide ou gazole ainsi chauffé circule dans l'espace annulaire 6, en amont de l'élément filtrant 4, du haut vers le bas, ce qui permet une meilleure séparation de l'eau avec le gazole, l'eau étant alors entraînée vers le bas, à la fois par la circulation du gazole de haut en bas et par l'effet de la gravité s'exerçant sur les particules d'eau plus dense que le gazole, en direction du fond 2a de la cuve métallique 2, vers l'espace de récupération d'eau 43. Selon ce mode de réalisation, le conduit de sortie 40 est également connecté avec la sortie de liquide 3b via le conduit de circulation 27 directement réalisée dans l'épaisseur du flasque 8. Selon ce mode de réalisation, le flasque inférieur 21 de l'élément filtrant 4 est raccordé de manière étanche à l'extrémité inférieure du tube séparateur 9.

Le gazole ou liquide à chauffer et à filtrer entre donc par l'entrée de liquide 3a puis dans l'ouverture ou passage 29 réalisé sur la face supérieure du flasque 8 puis circule dans le conduit d'entrée 39 en descendant dans l'enceinte 31 puis en montant dans l'enceinte 32 entre l'élément chauffant 15 et le fourreau 30. Le gazole ou liquide ainsi chauffé passe ensuite dans le canal 33 réalisé dans l'épaisseur du flasque 8 pour être dirigé radialement vers l'extérieur et en haut de l'élément filtrant 4. Le gazole ou liquide ainsi chauffé descend alors vers le bas pour traverser ledit élément filtrant radialement de l'extérieur vers l'intérieur avant de déboucher dans la zone d'aval puis de ressortir par la sortie de liquide 3b via le conduit de circulation 27.

Selon ce quatrième mode de réalisation représenté sur la figure 4, le connecteur 14 des moyens de réchauffage électrique est également monté de manière étanche et amovible à l'intérieur de la jupe 18 rapportée de manière fixe et étanche sur le couvercle 3.

Le fond du fourreau 30 présente un orifice 30d pour permettre le passage de l'extrémité inférieure de la carte de circuit imprimé 41 pourvue de moyens de détection d'eau 42 disposés dans l'espace de récupération d'eau 43, au voisinage du fond 2a de la cuve 2.

Dans ce quatrième mode de réalisation, bien que cela ne soit pas préféré, la paroi cylindrique 9a du tube séparateur 9 pourrait être omise. Le fourreau ferait alors office de tube séparateur entre le conduit d'entrée 39 et le conduit de sortie 40 (entre la zone d'amont 10 et la zone d'aval 11) et il faudrait prévoir des moyens d'étanchéité entre le flasque inférieur 21 et le fourreau 30. Le filet hélicoïdal 9e serait alors avantageusement maintenu sur l'extérieur du fourreau 30 ou omis. Dans ce dernier cas, il serait alors préférable de prévoir des moyens de centrage de l'élément filtrant 4, afin de reprendre la fonction du filet hélicoïdal.

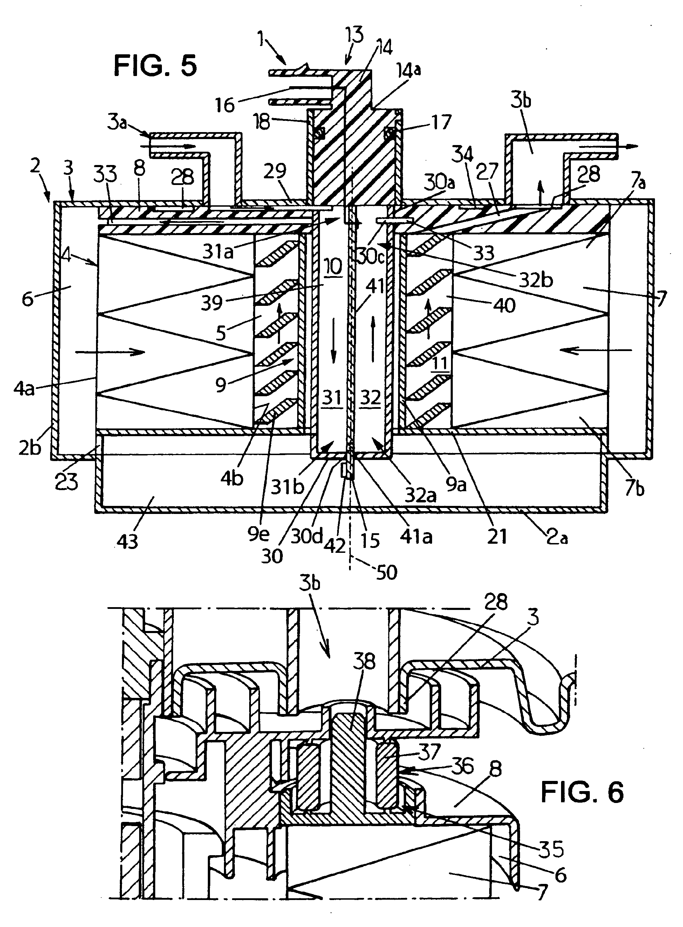

La figure 5 représente une variante du quatrième mode de réalisation représenté sur la figure 4. Selon cette variante de réalisation, l'élément filtrant 4 présente un diamètre externe plus important, ce qui permet de réaliser une rainure 28 qui peut être circulaire sur la surface supérieure du flasque 8. Cette rainure circulaire définit avec le couvercle 3, un canal circulaire étanche disposé en regard de la sortie de liquide 3b. Par ailleurs, le conduit de circulation 27 débouche également dans la rainure circulaire 28. La surface supérieure du flasque 8 comprend également une rainure circulaire 34 présentant un diamètre inférieur à celui de la rainure 28, cette rainure circulaire formant également un canal circulaire étanche qui est disposé en regard de l'entrée de liquide 3a tout en étant connecté au passage 29 qui permet une communication étanche entre l'entrée de liquide 3a et la zone d'amont 10. La présence de ces canaux circulaires étanches 28 et 34 permettent donc d'éviter toute indexation angulaire entre le flasque supérieur et les entrée et sortie de liquide 3a, 3b.

Bien entendu, selon le quatrième mode de réalisation et le cinquième représenté à la figure 5, des joints d'étanchéité peuvent également être disposés entre le flasque supérieur et le couvercle 3 afin d'assurer une étanchéité entre les zones d'amont 10 et d'aval 11.

Dans les quatrième et cinquième modes de réalisation, le fait de disposer le ou les éléments chauffants uniquement sur une seule face de la plaque 41 ne nuit pas aux échanges thermiques lors de la double mise en contact du carburant du liquide à filtrer avec la plaque 41, puisque par conduction thermique au travers de la plaque, la chaleur générée par les éléments chauffants est également conduite thermiquement jusque sur la face de la plaque qui ne porte pas les élément chauffants. Par conséquent, une face de la plaque qui ne porte pas d'éléments chauffants diffuse quand même de l'énergie calorifique au carburant qui la parcourt d'ou l'intérêt de préserver une double mise en contact.

Comme on peut le voir sur la figure 6, le flasque supérieur 8 peut également présenter un autre conduit 35 qui communique avec la sortie de liquide 3b et qui débouche également dans la rainure circulaire 28 réalisée sur la surface supérieure du flasque supérieur 8 et qui forme le canal circulaire étanche avec le couvercle 3. Ce conduit 35 permet une communication entre la sortie de liquide 3b et la zone d'amont 10 qui comprend l'espace annulaire 6. Ce conduit 35 sert à loger un dispositif de dégazage 36 comprenant par exemple un poral 37 formé par une pièce annulaire poreuse réalisée par frittage (ce poral 37 permet d'arrêter les impuretés pouvant être contenues dans le mélange gazole et air), ainsi qu'un gicleur 38 comportant des rainures calibrées pour laisser s'échapper, directement vers l'aval du filtre, un filet d'air calibré ne perturbant pas l'injection du moteur à combustion interne disposé en aval du filtre.

Bien entendu, comme dans tous les modes de réalisation préalablement décrits, la plaque de circuit imprimée 41 peut être pourvue d'un détecteur de pression et de moyens de détection d'eau 42 dans sa partie inférieure.

De plus, le connecteur 14 conforme à l'ensemble des modes de réalisation préalablement décrits peut être pourvu d'une zone de rupture 14a sur sa partie extérieure située au-delà de la jupe 18 ou de la paroi 12 afin d'éviter que le connecteur ne se fissure ou se casse à l'intérieur de la jupe 18 ou de la paroi 12 ce qui aurait alors pour conséquence de créer des fuites de liquide/gazole vers l'extérieur du système de filtration 1.

De plus, le flasque supérieur 8 de l'élément filtrant pourvu d'un conduit de circulation ou d'un conduit pour le système de dégazage peut être utilisé indépendamment des moyens de réchauffage montés de manière amovible sur le couvercle. De même, le connecteur 14 pourvu des passages 19 et 20 peut être utilisé indépendamment des conduits réalisés sur et dans le flasque supérieur 8 de l'élément filtrant.

## Revendications

1. Système de filtration de liquide comportant :
- une cuve (2) métallique sur laquelle est fixé un couvercle (3) pour former un boîtier délimitant un volume intérieur,
- un élément filtrant (4) disposé dans le volume intérieur du boîtier, ledit élément filtrant (4) présente une forme sensiblement annulaire et comporte une face externe (4a) et une face interne (4b), l'élément filtrant (4) définit un espace intérieur creux (5) et délimite une zone d'amont (10) communiquant avec une entrée de liquide (3a) et une zone d'aval (11) communiquant avec une sortie de liquide (3b),
- un premier conduit (39) s'étendant dans la zone d'amont (10) et dans l'espace intérieur creux (5), le premier conduit (39) étant relié de manière étanche à l'entrée de liquide (3a),
- un deuxième conduit (40) s'étendant dans la zone d'aval (11) et relié de manière étanche à la sortie de liquide (3b),
- un espace annulaire (6) s'étendant autour de la face externe (4a) de l'élément filtrant,
- des moyens de réchauffage électriques (13) du liquide montés de manière amovible et étanche sur le boîtier (2 ; 3), lesdits moyens de réchauffage comprenant un connecteur électrique (14) et un élément chauffant électrique (15) qui s'étend dans l'espace intérieur creux (5), dans le premier conduit (39),
- l'espace annulaire (6) est relié au premier conduit (39) et s'étend dans la zone d'amont (10), et
- le deuxième conduit (40) s'étend dans l'espace intérieur creux (5), de telle sorte que le liquide traverse l'élément filtrant (4) radialement depuis la face externe (4a) vers la face interne (4b) pour déboucher dans la zone d'aval (11),
- le système de filtration comporte en outre un tube séparateur (9) qui s'étend dans l'espace intérieur creux (5) et délimite le premier conduit (39), l'extrémité supérieure du tube séparateur (9) étant réalisée d'une seule pièce avec le connecteur électrique (14), le connecteur électrique comprenant une liaison conductrice permettant d'alimenter électriquement l'élément chauffant (15) qui est contenu dans le tube séparateur (9),
- le connecteur électrique (14) présente un passage (19) pour la liaison entre l'entrée de liquide (3a) et l'intérieur du tube séparateur (9), un autre passage (20), qui débouche dans la zone d'aval (11) formée autour du tube séparateur (9), permettant d'évacuer vers la sortie de liquide (3b) le liquide circulant dans la zone d'aval,
- le premier conduit (39) est relié à une extrémité à l'entrée de liquide (3a) et à l'autre extrémité à l'espace annulaire (6) par l'intermédiaire d'un espace de récupération d'eau (43) dans lequel le liquide circule radialement vers l'extérieur, de telle sorte que le liquide circule entre l'élément filtrant (4) et ladite cuve (2) avant de traverser l'élément filtrant (4) radialement depuis l'extérieur vers l'intérieur.

2. Système selon la revendication 1, dans lequel le premier conduit (39) et le deuxième conduit (40) sont séparés par le tube séparateur (9).

3. Système selon l'une quelconque des revendications précédentes, dans lequel le couvercle (3) présente une ouverture centrale délimitée par une paroi cylindrique (12) qui forme un logement dans lequel le connecteur électrique (14) est disposé de manière étanche et amovible.

4. Système selon l'une quelconque des revendications précédentes, dans lequel le connecteur électrique (14) est monté de manière amovible dans une jupe (12 ; 18) formée sur le couvercle (3) auquel est directement connecté le connecteur (14).

5. Système selon la revendication 4, dans lequel l'entrée et la sortie de liquide (3a, 3b) sont réalisées sur la jupe (12 ; 18) rapportée de manière étanche dans une ouverture pratiquée sur le couvercle (3), le connecteur (14) comprenant des passages (19, 20) pour relier de manière étanche l'entrée de liquide (3a) à la zone d'amont (10) et la sortie de liquide (3b) à la zone d'aval (11).

6. Système selon l'une quelconque des revendications 1 à 4, dans lequel l'entrée et la sortie de liquide (3a, 3b) sont réalisées sur le couvercle (3).

7. Système selon l'une quelconque des revendications précédentes, dans lequel l'élément chauffant (15) se présente sous la forme d'une plaque de circuit imprimé sur laquelle est réalisée au moins une piste de cuivre chauffante.

8. Système selon l'une quelconque des revendications 1 à 6, dans lequel l'élément chauffant (15) se présente sous la forme d'une plaque de circuit imprimé (41) et comprend une résistance chauffante (12).

9. Système selon la revendication 7 ou la revendication 8, dans lequel la plaque de circuit imprimé (41) comprend en outre des moyens de détection d'eau et/ou de pression et/ou de température.

## Claims

1. System for the filtration of liquid comprising:
- a metal bowl (2) onto which a cover (3) is fixed in order to form a housing delimiting an inner volume,
- a filter element (4) arranged in the inner volume of the housing, said filter element (4) having a substantially annular shape and comprising an outer face (4a) and an inner face (4b), the filter element (4) defining a hollow inner space (5) and delimiting an upstream area (10) communicating with a liquid inlet (3a) and a downstream area (11) communicating with a liquid outlet (3b),
- a first channel (39) extending into the upstream area (10) and into the hollow inner space (5), the first channel (39) being connected in a sealed manner to the liquid inlet (3a),
- a second channel (40) extending into the downstream area (11) and connected in a sealed manner to the liquid outlet (3b),
- an annular space (6) extending around the outer face (4a) of the filter element,
- electric heating means (13) for the liquid, detachably mounted in a sealed manner on the housing (2; 3), said heating means comprising an electrical connector (14) and an electric heating element (15) that extends into the hollow inner space (5) in the first channel (39),
and in which:
- the annular space (6) is connected to the first channel (39) and extends into the upstream area (10), and
- the second channel (40) extends into the hollow inner space (5), such that the liquid passes through the filter element (4) radially from the outer face (4a) to the inner face (4b) to then open out into the downstream area (11),
- the filtration system further comprises moreover a separating tube (9) which extends into the hollow inner space (5) and delimits the first channel (39), the upper end of the separating tube (9) being made in a single piece with the electrical connector (14), the electrical connector comprising a conductive connection making it possible to supply electricity to the heating element (15) which is contained in the separating tube (9),
- the electrical connector (14) has a passage (19) for the connection between the liquid inlet (3a) and the inside of the separating tube (9), another passage (20), which opens out into the downstream area (11) formed around the separating tube (9), allowing the liquid circulating in the downstream area to drain towards the liquid outlet (3b),
- the first channel (39) is connected at one end to the liquid inlet (3a) and at the other end to the annular space (6) via a water recycling space (43) in which the liquid circulates radially outwards, such that the liquid circulates between the filter element (4) and said bowl (2) before passing through the filter element (4) radially from outside to inside.

2. System according to claim 1, in which the first channel (39) and the second channel (40) are separated by the separating tube (9).

3. System according to any one of the previous claims, in which the cover (3) has a central opening delimited by a cylindrical wall (12) that forms a recess in which the electrical connector (14) is detachably arranged in a sealed manner.

4. System according to any one of the previous claims, in which the electrical connector (14) is detachably mounted in a skirt (12; 18) formed on the cover (3) to which the connector (14) is directly connected.

5. System according to claim 4, in which the liquid inlet and outlet (3a, 3b) are provided on the skirt (12; 18) set in a sealed manner in a opening made on the cover (3), the connector (14) comprising passages (19, 20) for connecting the liquid inlet (3a) to the upstream area (10) and the liquid outlet (3b) to the downstream area (11) in a sealed manner.

6. System according to any one of claims 1 to 4, in which the liquid inlet and outlet (3a, 3b) are provided on the cover (3).

7. System according to any one of the previous claims, in which the heating element (15) is presented in the form of a printed circuit board on which at least one copper track is provided for heating.

8. System according to any one of claims 1 to 6, in which the heating element (15) is presented in the form of a printed circuit board (41) and comprises a heating resistor (12).

9. System according to claim 7 or claim 8, in which the printed circuit board (41) comprises moreover means for detecting water and/or pressure and/or temperature.

## Patentansprüche

1. Flüssigkeitsfiltersystem, das Folgendes umfasst:
- einen Metallbehälter (2), auf dem ein Deckel (3) befestigt ist, um ein Gehäuse zu bilden, das ein Innenvolumen begrenzt,
- ein Filterelement (4), das im Innenvolumen des Gehäuses angeordnet ist, wobei das Filterelement (4) eine im Wesentlichen ringförmige Form aufweist und eine Außenseite (4a) und eine Innenseite (4b) umfasst, wobei das Filterelement (4) einen Innenhohlraum (5) definiert und einen stromaufwärtigen Bereich (10), die mit einem Flüssigkeitseintritt (3a) in Verbindung steht, und einen stromabwärtigen Bereich (11), die mit einem Flüssigkeitsaustritt (3b) in Verbindung steht, begrenzt,
- eine erste Leitung (39), die sich in der stromaufwärtigen Bereich (10) und in dem Innenhohlraum (5) erstreckt, wobei die erste Leitung (39) dicht mit dem Flüssigkeitseintritt (3a) verbunden ist,
- eine zweite Leitung (40), die sich in dem stromabwärtigen Bereich (11) erstreckt und dicht mit dem Flüssigkeitsaustritt (3b) verbunden ist,
- einen ringförmigen Raum (6), der sich um die Außenseite (4a) des Filterelements herum erstreckt,
- elektrische Mittel zur Vorwärmung (13) der Flüssigkeit, die entfernbar und dicht an dem Gehäuse (2; 3) montiert sind, wobei die Vorwärmungsmittel einen elektrischen Steckverbinder (14) und ein elektrisches Heizelement (15), das sich in dem Innenhohlraum (5) erstreckt, in der ersten Leitung (39) umfassen,
und wobei:
- der ringförmige Raum (6) mit der ersten Leitung (39) verbunden ist und sich in dem stromaufwärtigen Bereich (10) erstreckt und
- die zweite Leitung (40) sich derart in dem Innenhohlraum (5) erstreckt, dass die Flüssigkeit radial von der Außenseite (4a) durch das Filterelement (4) zur Innenseite (4b) läuft, um im stromabwärtigen Bereich (11) zu münden,
- das Filtersystem außerdem ein Trennrohr (9) umfasst, das sich in dem Innenhohlraum (5) erstreckt und die erste Leitung (39) begrenzt, wobei das obere Ende des Trennrohrs (9) einstückig mit dem elektrischen Steckverbinder (14) ausgeführt ist, wobei der elektrische Steckverbinder einen stromführenden Anschluss umfasst, die das Versorgen des Heizelements (15), das in dem Trennrohr (9) enthalten ist, mit Strom ermöglicht,
- der elektrische Steckverbinder (14) einen Durchtritt (19) für den Anschluss zwischen dem Flüssigkeitseintritt (3a) und dem Inneren des Trennrohrs (9) aufweist und das Entleeren der in dem stromabwärtigen Bereich zirkulierenden Flüssigkeit zum Flüssigkeitsaustritt (3b) durch einen weiteren Durchtritt (20), der in dem stromabwärtigen Bereich (11) mündet, der um das Trennrohr (9) herum ausgebildet ist, ermöglicht wird,
- die erste Leitung (39) mittels eines Wasserrückgewinnungsraums (43), in dem die Flüssigkeit radial zur Außenfläche zirkuliert, mit einem Ende mit dem Flüssigkeitseintritt (3a) und mit dem anderen Ende mit dem ringförmigen Raum (6) verbunden ist, so dass die Flüssigkeit zwischen dem Filterelement (4) und dem Behälter (2) zirkuliert, bevor sie radial von der Außenfläche durch das Filterelement (4) zur Innenfläche läuft.

2. System nach Anspruch 1, wobei die erste Leitung (39) und die zweite Leitung (40) durch das Trennrohr (9) getrennt sind.

3. System nach einem der vorhergehenden Ansprüche, wobei der Deckel (3) eine zentrale Öffnung aufweist, die von einer zylindrischen Wand (12) begrenzt wird und die eine Aufnahme bildet, in der der elektrische Steckverbinder (14) dicht und entfernbar angeordnet ist.

4. System nach einem der vorhergehenden Ansprüche, wobei der elektrische Steckverbinder (14) entfernbar in einer Verkleidung (12; 18) montiert ist, die in dem Deckel (3) ausgebildet ist und mit der der Steckverbinder (14) direkt verbunden ist.

5. System nach Anspruch 4, wobei der Flüssigkeitseintritt und der Flüssigkeitsaustritt (3a, 3b) auf der Verkleidung (12; 18) ausgeführt sind, die dicht in eine auf dem Deckel (3) hergestellte Öffnung eingebracht ist, wobei der Steckverbinder (14) Durchtritte (19, 20) zum dichten Verbinden des Flüssigkeitseintritts (3a) mit dem stromaufwärtigen Bereich (10) und des Flüssigkeitsaustritts (3b) mit dem stromabwärtigen Bereich (11) umfasst.

6. System nach einem der Ansprüche 1 bis 4, wobei der Flüssigkeitseintritt und der Flüssigkeitsaustritt (3a, 3b) auf dem Deckel (3) ausgeführt sind.

7. System nach einem der vorhergehenden Ansprüche, wobei das Heizelement (15) die Form einer gedruckten Leiterplatte aufweist, auf der mindestens eine Heizkupferbahn ausgeführt ist.

8. System nach einem der Ansprüche 1 bis 6, wobei das Heizelement (15) die Form einer gedruckten Leiterplatte (41) aufweist und einen Heizwiderstand (12) umfasst.

9. System nach Anspruch 7 oder 8, wobei die gedruckte Leiterplatte (41) außerdem Mittel zur Erfassung von Wasser und/oder des Drucks und/oder der Temperatur umfasst.
